# EUROPÄISCHE PATENTANMELDUNG

(11) **EP 2 148 194 A1**
(43) Veröffentlichungstag der Anmeldung: **27.01.2010**
(21) Anmeldenummer: 08160779.8
(22) Anmeldetag: 21.07.2008
(51) Int. Cl.: G01N 27/66, G01N 30/02, G01N 30/60, G01N 30/64

(54) **Mikrosystemtechnischer Photoionisationsdetektor und Herstellungsverfahren dafür**

(71) Anmelder: SLS Micro Technology GmbH, 21079 Hamburg (DE)
(72) Erfinder: Kuttnik, Lars, 21502 Geesthacht (DE); Lehmann, Uwe, 22587, Hamburg (DE); Klose, Volker, 21465, Wentorf (DE)
(74) Vertreter: Eisenführ, Speiser & Partner

(57) **Zusammenfassung**

Die Erfindung betrifft ein Verfahren und eine Vorrichtung zur Detektion ionisierbarer Stoffe, insbesondere Stoffe mit ionisierbaren Molekülen oder Atomen, umfassend ein erstes Substrat (10/110), insbesondere aus Pyrex, ein zweites Substrat (20/120), insbesondere aus Silizium, welches auf das erste Substrat gebondet ist, einen Ionisationskanal (11/122), der durch eine längliche Aussparung (11/121 und 122) in einem oder beiden Substraten gebildet wird und einen Probengaseinlass (11a/122a) mit einem Probengasauslass (11b/122b) verbindet, eine Strahlungsquelle für elektromagnetische Strahlung, insbesondere mit einer Wellenlänge im ultravioletten Bereich, ein lonisationsfenster, das für de elektromagnetische Strahlung, insbesondere für die Strahlung mit einer Wellenlänge im ultravioletten Bereich durchlässig ist und welches so angeordnet ist, dass ein durch den Ionisationskanal (11/122) strömendes Probegas durch das Ionisationsfenster mit elektromagentischer Strahlung aus der Strahlungsquelle bestrahlt wird, eine im Ionisationskanal (11/122) angeordnete Messkathode (25/120), eine im Ionisationskanal angeordnete Messanode und eine mit Messkathode (25/120) und Messanode gekoppelte Messschaltung zur Detektion von Ionen, welche aus dem Probengas auf die Messanode oder die Messkathode (25/120) treffen.

## Beschreibung

Die Erfindung betrifft ein Verfahren und eine Vorrichtung zur Detektion ionisierbarer Stoffe, insbesondere Stoffe mit ionisierbaren Molekülen oder Atomen.

In einer Vielzahl von physikalisch-chemischen Anwendungen ist es wünschenswert, unbekannte Substanzen hinsichtlich ihrer Zusammensetzung zu analysieren. Ein bedeutsamer Informationsanteil über solche unbekannten Substanzen ist die Erkenntnis, ob und in welchem Umfang und welcher Art die Substanz ionisierbare Anteile enthält, d.h. Moleküle oder Atome, die in einen positiv oder negativ geladenen Zustand versetzt werden können. Ein solches Versetzen von Stoffen oder Stoffelementen in einen ionisierten Zustand kann auf verschiedene Art und Weisen erfolgen, unter anderem ist dies durch Aussetzen des Stoffs bzw. der Substanz gegenüber einer elektromagnetischen Strahlung, insbesondere UV-Strahlung, möglich.

Auf Grundlage dieser physikalischen Erkenntnis ist es bekannt, unbekannte Substanzen hinsichtlich ihres Gehalts und der Art und Weise auf ionisierbare Anteile zu untersuchen. Dies geschieht nach einem bekannten Verfahren mittels eines Photoionisationsdetektors und einem entsprechenden Photoionisationsdetektionsverfahren. Hierbei wird ein zu analysierendes Gas angesaugt und durch eine Glasröhre geleitet. Von außerhalb wirkt auf diese Glasröhre UV-Licht ein und ionisiert hierdurch eine Reihe von ionisierbaren Molekülen bzw. Atomen in der unbekannten Substanz. Dieser lonisations- bzw. Aufladungsvorgang kann durch Entfernen oder Hinzufügen von Elektronen aus einem Molekül oder Atom erfolgen oder durch Aufspaltung eines Moleküls in zwei oder mehr Bestandteile, die entsprechend entgegengesetzt geladen sein können. Durch Platzieren einer Kathode und eine Anode in dem Glasrohr und Messen der zwischen Kathode und Anode herrschenden Spannung können auf die Kathode bzw. Anode auftreffende positive bzw. negative Moleküle oder Atome detektiert werden und hieraus auf deren Vorhandensein, Ionisationsgrad und anhand der Zeit, die für deren Ionisation benötigt wurde, auch auf deren Art und Weise geschlossen werden.

Das Einsatzgebiet von Photoionisationsdetektoren ist vielfältig und reicht von der labortechnischen Analyse von chemischen Verbindungen über ein (quasi-)kontinuierliches Monitoring der Umgebungsluft bis hin zu dem Aufspüren von Kampfmitteln.

Grundsätzlich ist es zur Steigerung der Effizienz und Verbesserung der Handhabbarkeit wünschenswert, Photoionisationsdetektoren in möglichst kompakter Bauweise und mit einem möglichst geringen Totvolumen auszugestalten, d.h. einem geringen Volumen, welches mit dem zu untersuchenden Gas gespült werden muss. Bekannte Photoionisationsdetektoren können zwar durch aufwendige Fertigungstechnik hinsichtlich dieser Aspekte optimiert werden, jedoch stößt dieser Optimierungsansatz beispielsweise aufgrund der Limitierungen bei der Herstellung der lonisationskammer und der Notwendigkeit der Platzierung von Kathode und Anode innerhalb dieser Ionisationskammer auf Grenzen. Daher kann selbst bei Ausreizen aller derzeit bekannten fertigungstechnischen Optimierungsmaßnahmen das Totvolumen und die Abmaße bekannter Photoionisationsdetektoren nicht in einem solchen Maß reduziert werden, dass die Probengasmenge in dem gewünschten Ausmaß herabgesetzt werden kann und hierdurch der Photoionisationsdetektor auch zur Detektion sehr kleiner Mengen von Proben einsetzbar wird.

Der Erfindung liegt die Aufgabe zugrunde, einen Photoionisationsdetektor bereitzustellen, der es ermöglicht, auch geringere Mengen an Probengasen zu analysieren als mit bekannten Photoionisationsdetektoren möglich.

Diese Aufgabe wird erfindungsgemäß gelöst durch einen mikrosystemtechnischen Photoionisationsdetektor, umfassend ein erstes Substrat, insbesondere aus Pyrex, ein zweites Substrat, insbesondere aus Silizium, welches auf das erste Substrat gebondet ist, einen Ionisationskanal, der durch eine längliche Aussparung in einem oder beiden Substraten gebildet wird und einen Probengaseinlass mit einem Probengasauslass verbindet, eine Strahlungsquelle für elektromagnetische Strahlung, insbesondere mit einer Wellenlänge im ultravioletten Bereich, ein Ionisationsfenster, das für die elektromagnetische Strahlung, insbesondere für die Strahlung mit einer Wellenlänge im ultravioletten Bereich durchlässig ist und welches so angeordnet ist, dass ein durch den lonisationskanal strömendes Probegas durch das Ionisationsfenster mit elektromagentischer Strahlung aus der Strahlungsquelle bestrahlt wird, eine im Ionisationskanal angeordnete Messkathode, eine im Ionisationskanal angeordnete Messanode und eine mit Messkathode und Messanode gekoppelte Messschaltung zur Detektion von Ionen, welche aus dem Probengas auf die Messanode oder die Messkathode treffen.

Erfindungsgemäß wird erstmalig ein funktionsfähiger und fertigungstechnisch realisierbarer Photoionisationsdetektor in miniaturisierter Bauweise in Mikrosystemtechnik bereitgestellt. Der Photoionisationsdetektor besteht aus einem lonisationskanal, durch den die zu analysierende Probengasmenge durchgeführt wird. Der Ionisationskanal ist vorzugsweise begrenzt durch ein erstes und zweites Substrat, die miteinander verbunden sind, wobei in deren Verbindungsgrenzfläche der Ionisationskanal ausgebildet ist, insbesondere durch einseitiges oder beidseitiges Ausbilden eines Grabens in einem bzw. beiden Substraten. Ein solcher Graben kann beispielsweise durch Sägen, Ätztechnologien oder dergleichen andere, aus der Mikrosystemtechnik bekannte Verfahren hergestellt werden und ist hierdurch mit äußerst geringen Abmessungen realisierbar.

Erfindungsgemäß ist ein Ionisationsfenster ausgebildet, das den Graben partiell oder entlang seiner gesamten Länge auf zumindest einer Seite begrenzt. Das Ionisationsfenster besteht aus einem für elektromagnetische Strahlung durchlässigen Material, insbesondere durchlässig für solche elektromagnetische Strahlung, die zur Ionisation der zu analysierenden Stoffe verwendet werden kann, wie beispielsweise UV-Licht. Das Ionisationsfenster kann einerseits durch ein zusätzliches Bauelement dargestellt werden, welches mit dem ersten oder dem zweiten Substrat oder beiden Substraten in solcher Art verbunden wird, dass es den Kanal begrenzt. Der erfindungsgemäße Photoionisationsdetektor könnte jedoch auch in der Art ausgebildet werden, dass das Ionisationsfenster durch eines der beiden Substrate selbst gebildet wird, d.h. dieses eine Substrat wird aus einem entsprechend strahlungsdurchlässigen Material ausgebildet.

Im Ionisationskanal sind eine Messkathode und eine Messanode angeordnet. Hierbei ist zu verstehen, dass Messkathode und Messanode oder eine dieser beiden Elektroden auch durch das erste und/oder zweite Substrat selbst ausgebildet werden können, indem diese entsprechend leitfähig - zumindest regional begrenzt - ausgebildet werden.

Auf diese Art und Weise wird eine miniaturisierte Anordnung bereitgestellt, die es grundsätzlich ermöglicht, ein Probengas in einem abgeschlossenen Volumen einer elektromagnetischen Strahlung auszusetzen, hierdurch zu ionisieren und die Ionen anhand der Messelektroden zu erfassen. Grundsätzlich umfasst der erfindungsgemäße Photoionisationsdetektor zu diesem Zweck eine entsprechende Strahlungsquelle für elektromagnetische Strahlung. Die Strahlungsquelle kann beispielsweise durch eine Gasentladungslampe konventioneller Bauart bereitgestellt werden. Insbesondere ist es bevorzugt, auch die Strahlungsquelle in einer möglichst geringen Abmessung auszuführen, um die Vorrichtung möglichst kompakt gestalten zu können. Es ist aber zu verstehen, dass insbesondere der lonisationskanal mit der entsprechenden Elektrodenanordnung und Durchlässigkeit für elektromagnetische Strahlung in mikrosystemtechnischer Bauweise hergestellt wird und die Strahlungsquelle ein hiervon separates, allerdings unmittelbar benachbartes Bauteil darstellen kann.

Der erfindungsgemäße Photoionisationsdetektor weist weiterhin eine Messschaltung zur Detektion der Spannung zwischen Messkathode und Messanode auf. Hierbei handelt es sich vorzugsweise um eine Messschaltung, die einerseits eine Spannungsversorgung an den Elektroden bereitstellt, andererseits eine Messung mit entsprechender Eingangsverstärkung der Elektrodenspannung realisiert und gegebenenfalls Signalfilterung zur Unterdrückung von Rauschsignalen durchführen kann.

Gemäß einer ersten bevorzugten Ausführungsform ist das Ionisationsfenster aus Magnesiumfluoridkristall oder Quarzglas ausgebildet und an dem ersten und/oder zweiten Substrat durch Verkleben befestigt. Magnesiumfluoridkristall hat sich als bevorzugt geeignetes Material herausgestellt, da es einerseits eine bevorzugte Verarbeitbarkeit mit mikrosystemtechnischen Verfahren, insbesondere Bonding und Ätzverfahren, ermöglicht, andererseits aber in gewünschter Weise durchlässig ist für UV-Licht und daher elektromagnetische Strahlung im relevanten Wellenlängenbereich durchlassen kann. Das Ionisationsfenster kann in einer entsprechenden Aussparung im ersten oder zweiten Substrat eingesetzt sein oder in anderer Weise so mit dem ersten und/oder zweiten Substrat verbunden sein, dass es den Ionisationskanal zumindest auf einer Seite begrenzt. Es ist zu verstehen, dass auch mehr als ein Ionisationsfenster vorgesehen sein kann, um eine höhere Bestrahlungsdichte im Ionisationskanal zu erzielen.

Gemäß einer weiteren bevorzugten Ausführungsform ist das erste und das zweite Substrat jeweils als Flächensubstrat ausgebildet und flächig durch Bonding aneinander befestigt sind und das Ionisationsfenster entlang eines Randbereichs oder eines Randbereichabschnittes der beiden Flächensubstrate befestigt. Bei dieser Ausgestaltung handelt es sich um eine fertigungstechnisch zu bevorzugende Geometrie des Photoionisationsdetektors, bei der der Ionisationskanal beispielsweise durch Sägen oder Ätzen einer Vertiefung in einer oder beiden Substratflächen ausgebildet werden kann, wobei die Vertiefung sich zumindest bis zu einem Rand erstreckt und somit bei Aufeinanderbonden der beiden Substrate zu einem zu zumindest einer Randseite hin offenen Hohlraum innerhalb der gebondeten Substrate führt. Auf diesem Randbereich kann dann ein lonisationsfenster befestigt werden, beispielsweise aus Magnesiumfluoridkristall und auf diese Weise durch seitliches Eindringen von UV-Licht eine Ionisation von Gasen in dem Ionisationskanal ermöglichen.

Weiterhin ist es bevorzugt, wenn das Ionisationsfenster durch eine Öffnung im ersten oder zweiten Substrat ausgebildet ist. Diese Ausgestaltung ermöglicht eine weitestgehend variable Ausgestaltung der Geometrie des Ionisationskanals, wobei die Bestrahlungsmöglichkeit durch eine entsprechende Öffnung in einem der beiden Substrate oder auch beiden Substraten und Einsetzen eines entsprechenden Fensters in diese Öffnung erreicht wird.

Noch weiter ist es bevorzugt, wenn das erste oder zweite Substrat aus einem für die elektromagnetische Strahlung, insbesondere für die Strahlung mit einer Wellenlänge im ultravioletten Bereich durchlässigen Material ausgebildet ist und das Ionisationsfenster ausbildet. Auf diese Weise kann der Photoionisationsdetektor fertigungstechnisch insoweit vereinfacht werden, als dass lediglich das Aufeinanderbonden von zwei Substraten notwendig ist und hierbei durch eines der beiden Substrate die für den Messeffekt erforderliche Strahlungsdurchlässigkeit für beispielsweise UV-Licht bereitgestellt wird.

Gemäß einer weiteren bevorzugten Ausführungsform ist die Messkathode oder die Messanode als Abschnitt des ersten Substrats ausgebildet. So kann beispielsweise bei Verwendung von Silizium für eines der beiden Substrate eine entsprechende Leitfähigkeit bereitgestellt werden und hierdurch eine der beiden Elektroden am Substrat selbst ausgebildet werden.

In entsprechender Weise kann der erfindungsgemäße Photoionisationsdetektor gemäß der zuvor beschriebenen Fortbildung noch weiter fortgebildet werden, indem die Messanode oder die Messkathode als Abschnitt des zweiten Substrats ausgebildet ist. Bei dieser Ausgestaltung sind dann sowohl Messanode als auch Messkathode an dem ersten bzw. zweiten Substrat ausgebildet und hierdurch eine fertigungstechnisch weitgehende Vereinfachung erreicht sowie ein robuster Aufbau der gesamten Messanordnung erzielt.

Alternativ oder in Ergänzung zu einer Ausgestaltung mit einer Elektrode in Form eines Substratabschnitts kann die Erfindung fortgebildet werden, indem die Messanode oder die Messkathode durch eine im Ionisationskanal angeordnete Metalllage, insbesondere eine Platinlage ausgebildet ist. Zur Herstellung einer solcherart ausgestalteten Messanode oder Messkathode kann beispielsweise mittels Sputtern eine entsprechende Metalllage mit den entsprechenden Zuleitungen auf ein Substrat aufgebracht werden.

Schließlich ist es bevorzugt, wenn die Strahlungsquelle eine lichtemittierende Diode ist. Wie bereits zuvor erläutert, ist es bevorzugt, auch die Strahlungsquelle in möglichst kompakter Bauform auszuführen. Derzeit bekannt sind miniaturisierte Gasentladungslampen, die jedoch oftmals noch Abmessungen von mehr als 2,5cm Länge und 10mm Durchmesser aufweisen. Grundsätzlich sind lichtemittierende Dioden (LED) bekannt, die bereits elektromagnetische Strahlung mit einer Wellenlänge von 300nm abstrahlen. Mit solchen Wellenlängen ist allerdings eine Ionisation nur in einem sehr schwachen Ausmaß erzielbar und es ist angestrebt, LEDs für die erfindungsgemäße Vorrichtung einzusetzen, die in der Lage sind, elektromagnetische Strahlung auszusenden, die noch näher am UV-Bereich liegt oder sogar den UV-Bereich umfasst.

Ein weiterer Aspekt der Erfindung ist ein mikrosystemtechnischer Gaschromatograph, umfassend: eine Trennsäule aus einem ersten und einem zweiten Substrat, die aufeinander gebondet sind und in der gebondeten Grenzfläche einen einseitig oder beidseitig ausgebildeten Trennsäulenkanal aufweisen, einen Injektor zur Injektion eines Probevolumens aus einem Probegas in die Trennsäule, eine Analyseeinheit zur Detektion der aus der Trennsäule austretenden, aufgetrennten Bestandteile des Probevolumens, wobei die Analyseeinheit ein mikrosystemtechnischer Photoionisationsdetektor der zuvor beschriebenen Bauweise ist. Aus EP 1 558 156 B1 und DE 197 26 000 C1 sind Gaschromatographen in mikrosystemtechnischer Bauart bekannt. Solche Gaschromatographen dienen dazu, unbekannte Substanzen zunächst in Gasfraktionen unterschiedlichen Molekulargewichts aufzutrennen und dann diese zu detektieren, was beispielsweise mittels eines Wärmeleitfähigkeitsdetektors erfolgen kann. Aus DE 199 06 100 C1 ist ein Durchflusssensor für solche Anwendungen bekannt. Allerdings erhält man mit den solcherart vorbekannten Vorrichtungen oftmals nur eine bestimmte Aussage über die unbekannte Substanz, welche nicht die Kenntnis deren ionisierbarer Anteile umschließt. Es ist daher erfindungsgemäß vorgesehen, den erfindungsgemäßen Photoionisationsdetektor in Verbindung mit einem mikrosystemtechnischen Gaschromatographen bereitzustellen. Hierdurch wird einerseits die durch das geringe Totvolumen des erfindungsgemäßen Photoionisationsdetektors mögliche geringe Probenmenge mit den auch aus einem mikrosystemtechnischen Gaschromatographen austretenden, nur geringen Probenfraktionen kombiniert und auf diese Weise in besonders vorteilhafter Form die Analyse sehr geringer Probenmengen auf ionisierbare Anteile ermöglicht. Dabei können Trennsäule und Ionisationskanal in ein und denselben Substraten ausgebildet werden, was die Bauformabmessungen weiter reduziert und den Fertigungsaufwand verringert.

Schließlich ist ein weiterer Aspekt der Erfindung ein Verfahren zur Herstellung eines miniaturisierten Photoionisationsdetektors, mit den Schritten: Ausbilden eines Ionisationskanals in einer Oberfläche eines ersten Substrats, Bonden der Oberfläche des ersten Substrats auf eine Oberfläche eines zweiten Substrats, Ausbilden einer Messkathode und Messanode in dem Ionisationskanal, Verbinden einer für elektromagnetische Strahlung, insbesondere mit einer Wellenlänge im ultravioletten Bereich, durchlässigen Substratmaterials mit dem ersten und/oder zweiten Substrat in solcher Weise, dass durch das Substratmaterial fallende elektromagnetische Strahlung ein den Ionisationskanal durchströmendes Probegas bestrahlt.

Das erfindungsgemäße Verfahren stellt eine kostengünstige und effiziente Möglichkeit bereit, Photoionisationsdetektoren in miniaturisierter Bauweise herzustellen, indem in der zuvor erläuterten Weise mikrosystemtechnische Fertigungsschritte abgewickelt werden und ein mikrosystemtechnisch hergestellter Photoionisationsdetektor erzielt wird.

Eine bevorzugte Ausführungsform wird anhand der Figuren erläutert. Es zeigen:
- Fig. 1:: eine perspektivische, schematische Ansicht einer ersten Ausfüh- rungsform eines erfindungsgemäßen Photoionisationsdetektors, und
- Fig. 2:: eine perspektivische, schematische Darstellung einer zweiten Aus- führungsform eines erfindungsgemäßen Photoionisationsdetektors.

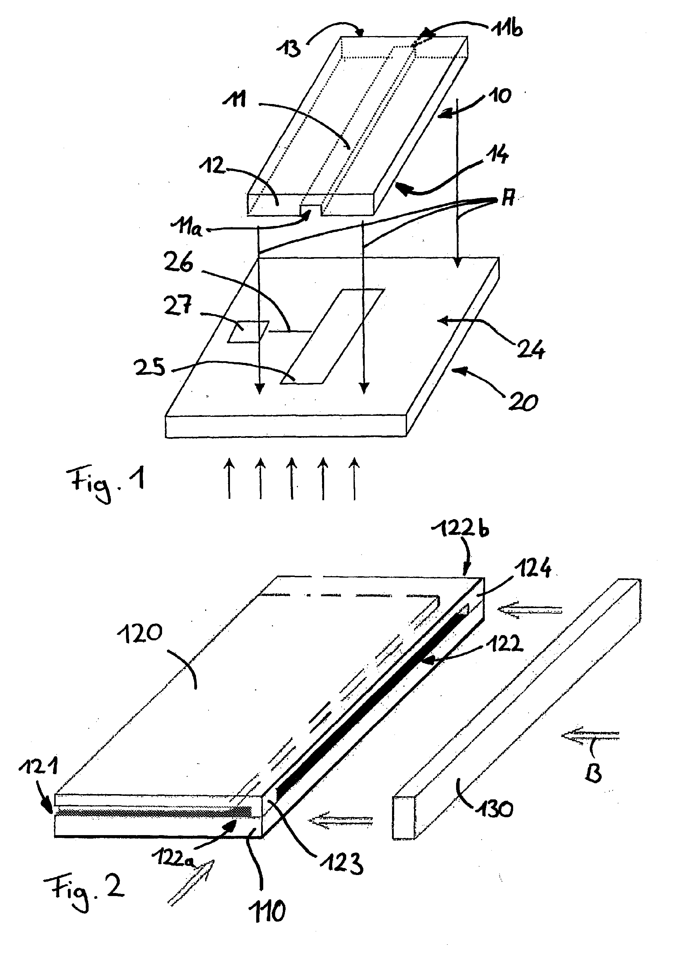

Bezug nehmend zunächst auf Figur 1 umfasst der erfindungsgemäße Photoionisationsdetektor ein Pyrexsubstrat 10, in das ein Längskanal 11 eingesägt ist. Der Längskanal 11 erstreckt sich in Längsrichtung des rechteckigen Pyrexsubstrats 10 von einer Frontfläche 12 zu einer Rückfläche 13 und ist insoweit durchgehend, als dass in den Stirnflächen durch den Kanal entsprechende Öffnungen 11a, b sind. Im gezeigten Beispiel wird davon ausgegangen, dass der Kanal durch Einsägen gefertigt worden ist, es ist aber zu verstehen, dass auch andere Fertigungsmethoden, wie beispielsweise Ätzen oder dergleichen eingesetzt werden können.

Der Kanal 11 ist zumindest teilweise mit einem leitfähigen Material beschichtet, um eine Messanode bereitzustellen. Die Messanode ist mittels einer Leiterbahn mit einem Anschlussfeld (nicht dargestellt) verbunden.

Eine Unterfläche 14 des Pyrexsubstrates 10 ist auf eine Oberfläche 24 eines Magnesiumfluoridkristallsubstrates gebondet, wie angedeutet durch die drei Pfeile A.

Auf dem Magnesiumfluoridkristallsubstrat 20 ist eine gitterförmige Struktur 25 aus einem leitfähigen Metall, vorzugsweise Platin, aufgesputtert. Diese Gitterstruktur 25 stellt die Messkathode dar und ist durch ihre konstruktive Beabstandung von der Beschichtung des Kanals 11 von dieser elektrisch isoliert.

Das Pyrexsubstrat 10 erstreckt sich in Querrichtung zum Kanal 11 weniger weit als das Magnesiumfluoridkristallsubstrat 20 und deckt daher nur einen Teil der Oberfläche 24 ab. Die Gitterstruktur 25 ist mittels einer Leiterbahn 26 mit einem Anschlussfeld 27 verbunden, das außerhalb des von dem Pyrexsubstrat 10 abgedeckten Bereichs der Oberfläche 24 liegt.

Wie in Figur 1 durch die Pfeile B angedeutet, kann von der der Oberfläche 24 gegenüberliegenden Seite des Magnesiumfluoridkristallsubstrats Licht durch das Magnesiumfluoridkristallsubstrat hindurchtreten, insbesondere UV-Licht. Hierdurch wird ein von der Einlassöffnung 11 a zu der Auslassöffnung 11 b des Kanals 11 strömendes Gas mit UV-Licht bestrahlt und ionisierbare Anteile innerhalb dieses Gases ionisiert und erzeugen eine entsprechende Spannung, die als Messgröße Aufschluss über den Anteil, sowohl qualitativ als auch quantitativ, ionisierbarer Anteile im Gas ergibt. Es ist zu verstehen, dass das verwendete UV-Licht von einer entsprechenden UV-Lichtquelle (nicht dargestellt) stammt, die benachbart zu den Substraten 10, 20 angeordnet ist und die erzeugte Messspannung von einer entsprechenden Messschaltung (nicht gezeigt) gefiltert, verstärkt und gemessen werden kann.

Figur 2 zeigt eine alternative Ausführungsform. Bei dieser Ausführungsform ist ein Pyrexsubstrat 110 flächig auf ein Siliziumsubstrat 120 gebondet.

Das Siliziumsubstrat 120 ist dabei so strukturiert, dass seine zum Pyrexsubstrat 110 weisende Oberfläche nicht das gesamte Pyrexsubstrat bedeckt, sondern entlang einer vorderen Frontfläche eine Aussparung 121 aufweist und eine an einer Längsseite in gleicher Weise verlaufende Aussparung 122 aufweist, durch die ein Ionisationskanal gebildet wird. Zwei in den zur Frontseite 122 weisenden Längsseite angeordneten Ecken vorgesehene Abstützungsbrücken 123, 124 definieren einen Gaseinlass 122a und einen Gasauslass 122b, durch den das Probengas einströmen kann und nach Durchströmen des durch die Aussparung 122 gebildeten Kanals wieder ausströmen kann.

Die von dem Siliziumsubstrat 120 nicht bedeckte Fläche des Pyrexsubstrats 110 ist mit einer Platinschicht versehen, um hierdurch die Messanode bereitzustellen. Die Messkathode wird bei der gezeigten Ausführungsform durch das Siliziumsubstrat 120 bereitgestellt. In der frontseitigen Aussparung 121 ist die Platinschicht als elektrische Anschlussleitung ausgeführt und dient der Verbindung mit einer entsprechenden Messschaltung.

Auf der den Kanal 122 aufweisenden Längsseite des Silizium- bzw. Pyrexsubstrates ist ein Magnesiumfluoridkristallsubstrat 130 entlang der gesamten Länge aufgesetzt. Dieses Magnesiumfluoridkristallsubstrat 130 dient einerseits der längsseitigen Abdichtung des Ionisationskanals 122 und andererseits als Fenster für UV-Licht B, welches von der Längsseite her auf den Ionisationskanal 122 strahlt.

Durch die gewählte Geometrie kann ein Probengas, welches durch die Eintrittsöffnung 122a in den Ionisationskanal 122 einströmt und diesen durchströmt, mittels UV-Licht, welches durch das Magnesiumfluoridkristallsubstrat hindurchtritt, bestrahlt werden und hierdurch die ionisierbaren Anteile des Probengases ionisieren. Diese erzeugen somit durch entsprechenden Niederschlag auf der Messkathode bzw. Messanode für eine messbare Spannung und aus deren zeitlichem Verlauf und deren Höhe kann auf Qualität und Quantität der ionisierbaren Anteile im Probengas geschlossen werden. Es ist wiederum zu verstehen, dass die hierzu erforderliche UV-Lichtquelle und Messschaltung in Figur 2 nicht abgebildet sind.

## Patentansprüche

1. Mikrosystemtechnischer Photoionisationsdetektor, umfassend:
- ein erstes Substrat 10, 110, insbesondere aus Pyrex,
- ein zweites Substrat 20, 120, insbesondere aus Silizium, welches auf das erste Substrat gebondet ist,
- einen Ionisationskanal 11, 122, der durch eine längliche Aussparung in einem oder beiden Substraten gebildet wird und einen Probengaseinlass 11 a, 122a mit einem Probengasauslass 11 b, 122b verbindet,
- eine Strahlungsquelle für elektromagnetische Strahlung, insbesondere mit einer Wellenlänge im ultravioletten Bereich,
- ein Ionisationsfenster 20, 130, das für die elektromagnetische Strahlung, insbesondere für die Strahlung mit einer Wellenlänge im ultravioletten Bereich durchlässig ist und welches so angeordnet ist, dass ein durch den Ionisationskanal strömendes Probegas durch das lonisationsfenster mit elektromagentischer Strahlung aus der Strahlungsquelle bestrahlt wird,
- eine im Ionisationskanal angeordnete Messkathode,
- eine im Ionisationskanal angeordnete Messanode,
- eine mit Messkathode und Messanode gekoppelte Messschaltung zur Detektion von Ionen, welche aus dem Probengas auf die Messanode oder die Messkathode treffen.

2. Photoionisationsdetektor nach Anspruch 1,
**dadurch gekennzeichnet, dass** das Ionisationsfenster aus Magnesiumfluoridkristall ausgebildet ist und an dem ersten und/oder zweiten Substrat durch Bonding befestigt ist.

3. Photoionisationsdetektor nach Anspruch 1 oder 2,
**dadurch gekennzeichnet, dass** das erste und das zweite Substrat jeweils als Flächensubstrat ausgebildet ist und flächig durch Bonding aneinander befestigt sind und das Ionisationsfenster entlang eines Randbereichs oder eines Randbereichabschnittes der beiden Flächensubstrate befestigt ist.

4. Photoionisationsdetektor nach dem vorhergehenden Anspruch,
**dadurch gekennzeichnet, dass** der Ionisationskanal durch eine Vertiefung in einer oder beiden aufeinandergebondeten Flächen des ersten und zweiten Substrats ausgebildet ist und sich die Vertiefung bis zu dem Randbereich, an dem das Ionisationsfenster befestigt ist, erstreckt.

5. Photoionisationsdetektor nach Anspruch 1 oder 2,
**dadurch gekennzeichnet, dass** das Ionisationsfenster durch eine Öffnung im ersten oder zweiten Substrat ausgebildet ist.

6. Photoionisationsdetektor nach Anspruch 1 oder 2,
**dadurch gekennzeichnet, dass** das erste oder zweite Substrat aus einem für die elektromagnetische Strahlung, insbesondere für die Strahlung mit einer Wellenlänge im ultravioletten Bereich durchlässigen Material asugebildet ist und das Ionisationsfenster ausbildet.

7. Photoionisationsdetektor nach einem der vorhergehenden Ansprüche,
**dadurch gekennzeichnet, dass** die Messkathode oder die Messanode als Abschnitt des ersten Substrats ausgebildet ist.

8. Photoionisationsdetektor nach dem vorhergehenden Anspruch,
**dadurch gekennzeichnet, dass** die Messanode oder die Messkathode als Abschnitt des zweiten Substrats ausgebildet ist.

9. Photoionisationsdetektor nach einem der vorhergehenden Ansprüche 1-7,
**dadurch gekennzeichnet, dass** die Messanode und/oder die Messkathode durch eine im Ionisationskanal angeordnete Metalllage, insbesondere eine Platin- oder Titanlage ausgebildet ist.

10. Photoionisationsdetektor nach einem der vorhergehenden Ansprüche,
**dadurch gekennzeichnet, dass** die Strahlungsquelle eine lichtemittierende Diode ist.

11. Mikrosystemtechnischer Gaschromatograph, umfassend:
- eine Trennsäule aus einem ersten und einem zweiten Substrat, die aufeimamder gebondet sind und in der gebondeten Grenzfläche einen einseitig oder beidseitig ausgebildeten Trennsäulenkanal aufweisen,
- einen Injektor zur Injektion eines Probevolumens aus einem Probegas in die Trennsäule,
- eine Analyseeinheit zur Detektion der aus der Trennsäule austretenden, aufgetrennten Bestandteile des Probevolumens,
**dadurch gekennzeichnet, dass** die Analyseeinheit ein mikrosystemtechnischer Photoionisationsdetektor nach einem der vorhergehenden Ansprüche 1-10 ist.

12. Verfahren zur Herstellung eines miniaturisierten Photoionisationsdetektors, mit den Schritten:
- Ausbilden eines Ionisationskanals in einer Oberfläche eines ersten Substrats,
- Bonden der Oberfläche des ersten Substrats auf eine Oberfläche eines zweiten Substrats,
- Ausbilden einer Messkathode und Messanode in dem lonisationskanal,
- Verbinden einer für elektromagnetische Strahlung, insbesondere mit einer Wellenlänge im ultravioletten Bereich, durchlässigen Substratmaterials mit dem ersten und/oder zweiten Substrat in solcher Weise, dass durch das Substratmaterial fallende elektromagnetische Strahlung ein den Ionisationskanal durchströmendes Probegas bestrahlt.
